# EUROPÄISCHE PATENTANMELDUNG

(11) **EP 4 498 036 A1**
(43) Veröffentlichungstag der Anmeldung: **29.01.2025**
(21) Anmeldenummer: 24189982.2
(22) Anmeldetag: 22.07.2024
(51) Int. Cl.: G01B 11/275

(54) **ANORDNUNG UND VERFAHREN ZUR ERFASSUNG DER LAGE UND AUSRICHTUNG DER RÄDER EINES FAHRZEUGS**

(30) Priorität: 26.07.2023 DE 102023119762
(71) Anmelder: WMS Wagner GmbH, 94522 Wallersdorf (DE)
(72) Erfinder: Wagner, Franz, 94363 Oberschneiding (DE)
(74) Vertreter: Wolf, Gerhard

(57) **Zusammenfassung**

Die Erfindung betrifft eine Anordnung umfassend eine Messstation (1) mit mehreren Sensoren (2) zur Erfassung von Messmarken (4) und mehrere an den Rädern (11) eines Fahrzeugs (10) zu montierende Messmarkenträger (3) mit daran angeordneten Messmarken (4), wobei die an unterschiedlichen Fahrzeugachsen angeordneten Messmarken (4) relativ zueinander einen Höhenversatz aufweisen.

## Beschreibung

Die Erfindung betrifft eine Anordnung und ein Verfahren zur Erfassung der Lage und Ausrichtung der Räder eines Fahrzeugs mittels an den Rädern des Fahrzeugs montierten Messmarken.

Es ist bekannt, Messmarken an den Rädern eines Fahrzeugs zu fixieren und diese Messmarken mittels einer Sensorik zu erfassen, um die Lage der Räder bzw. die Achsstellung des Fahrzeugs zu bestimmen. Die Sensorik wird hierbei an einem Balken vor oder hinter dem Fahrzeug angeordnet und die Sensoren erfassen die seitlich von der Rädern abstehenden Messmarken in deren Position und Ausrichtung, um basierend darauf beispielsweise die Achsstellung oder die geometrische Fahrachse des Fahrzeugs bestimmen zu können.

Problematisch bei den Messanordnungen ist, dass die Sensoren bislang an einem relativ breiten Messbalken angeordnet werden müssen, um die Messmarken erfassen zu können. Die Messmarken liegen nämlich in Richtung der Fahrzeuglängsachse gesehen hintereinander, so dass beispielsweise eine zum Sensor näher angeordnete Messmarke in der horizontalen Sichtverbindung zwischen dem Sensor und der weiter entfernt liegenden Messmarke liegt und damit diese Messmarke zumindest partiell für den Sensor verdeckt ist. Durch eine größere Beabstandung der Sensoren relativ zueinander kann diese Verdeckung behoben werden, da die Messmarken schräg von außen erfassbar sind. Jedoch führt dies zu einer erheblichen Verbreiterung der Messanordnung und damit zu einem erhöhten Platzbedarf.

Ein weiterer Nachteil besteht darin, dass durch eine größere Beabstandung der Sensoren relativ zueinander die Erfassung der Messmarken schräg von außen bei seitlich neben dem Fahrzeug platzierten Einrichtungen, beispielsweise den Säulen einer Säulenhebebühne, nicht möglich ist, da die Einrichtungen in der Sichtlinie zwischen dem Sensor und der relativ zum Sensor weiter entfernt liegenden Messmarke liegen.

Ausgehend hiervon ist es Aufgabe der Erfindung, eine Messanordnung anzugeben, die kompakt bauend ist und die eine Vermessung der Lage der Räder bzw. der Achsstellung des Fahrzeugs auch bei seitlich neben dem Fahrzeug angeordneten Einrichtungen ermöglicht.

Die Aufgabe wird durch eine Messanordnung mit den Merkmalen des unabhängigen Patentanspruchs 1 gelöst. Bevorzugte Ausführungsformen sind Gegenstand der Unteransprüche. Ein Verfahren zur Erfassung der Lage und Ausrichtung der Räder eines Fahrzeugs ist Gegenstand des nebengeordneten Patentanspruchs 12.

Gemäß einem ersten Aspekt bezieht sich die Erfindung auf eine Anordnung umfassend eine Messstation mit mehreren Sensoren zur Erfassung von Messmarken und mehrere an den Rädern eines Fahrzeugs zu montierende Messmarkenträger mit daran angeordneten Messmarken. Die Sensoren können beispielsweise Kameras, insbesondere hochauflösende Kameras sein. Die Messmarkenträger weisen eine Messmarkenträgermitte auf, die zur Durchführung einer Messung auf Höhe der Radnabenmitte an den Rädern des Fahrzeugs anzuordnen ist. Die Messmarken sind an den Messmarkenträgern in Bezug auf diese Messmarkenträgermitte höhenversetzt angeordnet, und zwar derart, dass eine an der Hinterachse anzuordnende Messmarke einen Höhenversatz in eine erste Richtung aufweist und dass eine an der Vorderachse anzuordnende Messmarke einen Höhenversatz in eine zweite Richtung aufweist, die zur ersten Richtung entgegengesetzt verläuft. In anderen Worten stehen damit die vorderachsseitig zu montierenden Messmarken und die hinterachsseitig zu montierenden Messmarken in unterschiedliche Richtungen von einer Radnabenebene, in der die Radnabenmitten des Fahrzeugs liegen, ab. Jeweils ein Sensor der Messstation ist einer Fahrzeugseite des zu vermessenden Fahrzeugs zugeordnet. Die Sensoren sind derart angeordnet, dass durch den auf der jeweiligen Fahrzeugseite angeordneten Sensor in einer horizontalen oder im Wesentlichen horizontalen Erfassungsrichtung, die parallel zur Mittellängsachse eines zu vermessenden Fahrzeugs ausgerichtet ist, die an der Vorderachse und an der Hinterachse auf der jeweiligen Fahrzeugseite angeordneten Messmarken gleichzeitig erfassbar sind. In anderen Worten wird durch die Anordnung der Sensoren und den Höhenversatz der Messmarken erreicht, dass jeweils sowohl die an der Vorderachse als auch die an der Hinterachse angeordnete Messmarke im Sichtfeld des Sensors liegen und damit gleichzeitig erfassbar sind.

Der wesentliche technische Vorteil der Messanordnung besteht darin, dass durch den in vertikaler Richtung bestehenden Höhenversatz die Baugröße der Messstation reduziert werden kann, da die Sensoren in einer horizontalen oder im Wesentlichen horizontalen Erfassungsrichtung, die parallel zur Mittellängsachse des Fahrzeugs verläuft, die an der Vorderachse und an der Hinterachse auf einer Fahrzeugseite angeordneten Messmarken gleichzeitig erfassen kann, da diese sich aufgrund des Versatzes nicht überdecken. Damit ist keine Erfassung der Messmarken schräg von außen nötig, wodurch die Breite der Messstation deutlich verkleinert werden kann. Zudem kann eine Fahrzeugvermessung auch dann erfolgen, wenn seitlich neben dem Fahrzeug angeordnete Messeinrichtungen und/oder Hebevorrichtungen vorhanden sind, beispielsweise eine Säule einer Säulenhebebühne o.a. Dadurch werden die Anforderungen an das Messumfeld deutlich reduziert. Zudem können die Sensoren an der Messtation derart ausgerichtet werden, dass diese einen größeren Bereich seitlich neben dem Fahrzeug erfassen, so dass dort aufgestellte weitere Messmarken, die beispielsweise zur Kalibrierung von zur Seite hin ausgerichtete Fahrzeugsensoren nötig sind, durch die Sensoren ebenfalls erfasst werden können.

Gemäß einem Ausführungsbeispiel sind die Sensoren in vertikaler Richtung gesehen jeweils zumindest im Wesentlichen auf Höhe der Radnabenmitte angeordnet. Dadurch kann mittels eines Sensors, dessen Erfassungsmittelachse (d.h. die Achse, die lotrecht zu einer vertikal ausgerichteten Erfassungsebene des Sensors verläuft) horizontal ausgerichtet ist, aufgrund des Höhenversatzes der Messmarken sowohl die an der Vorderachse als auch die an der Hinterachse montierte Messmarke gleichzeitig erfasst werden.

Gemäß einem Ausführungsbeispiel ist an der Messtation ein Paar von Sensoren angeordnet, und zwar ist jeweils ein Sensor einer Fahrzeugseite zugeordnet. Die Sensoren weisen zueinander einen Abstand auf, der gleich oder im Wesentlichen gleich dem Abstand der an einer Fahrzeugachse auf gegenüberliegenden Fahrzeugseiten angeordneten Messmarken ist. Die Sensoren erfassen damit die Messmarken nicht schräg von außen, sondern in einer Richtung parallel oder im Wesentlichen parallel zur Mittellängsachse des Fahrzeugs. Damit kann eine Reduzierung der Baugröße der Messstation und eine raumsparende Erfassung der Messmarken sichergestellt werden.

Gemäß einem Ausführungsbeispiel weisen die Sensoren in horizontaler Richtung gesehen einen Abstand auf, der im Wesentlichen dem Abstand entspricht, den die Messmarkenmittelpunkte der an einer Achse angeordneten Messmarken aufweisen. Die Messmarkenmittelpunkte werden beispielsweise durch den Kreuzungspunkt der Diagonalen eines rechteckförmigen Musterfelds gebildet, das auf der Messmarke vorgesehen ist. Vorzugsweise verläuft die Erfassungsmittelachse (d.h. die Achse, die lotrecht zu einer vertikal ausgerichteten Erfassungsebene des Sensors verläuft) eines Sensors parallel oder im Wesentlichen parallel zu der Achse, die durch die Messmarkenmittelpunkte der Messmarken aufgespannt wird, die an einer Fahrzeugseite an der Vorderachse und an der Hinterachse montiert sind. Insbesondere verläuft diese Erfassungsmittelachse durch die Messmarkenmittelpunkte dieser Messmarken.

Gemäß einem Ausführungsbeispiel weisen die Messmarken jeweils ein rechteckförmig ausgebildetes Musterfeld auf. Im montierten Zustand der Messmarke ist das Musterfeld hochkant ausgerichtet. In anderen Worten ist die horizontal gemessene Breite des Musterfelds kleiner als die vertikal gemessene Höhe des Musterfelds. Dadurch wird erreicht, dass die Messmarke einen geringen seitlichen Überstand über die Außenkante des Rades aufweist, so dass die Gesamtbreite des Messsystems, insbesondere die Breite des Messbalkens, an dem die Sensoren montiert sind, möglichst klein ist.

Vorzugsweise stehen die Messmarken mit deren vom Fahrzeug abgewandten Außenkante über die Ebene, die vom Felgenrand des jeweiligen Rades des Fahrzeugs aufgespannt wird, mit maximal 30cm, insbesondere mit maximal 25 cm seitlich über. Die Messmarken weisen dabei vorzugsweise eine in horizontaler Richtung gemessene Breite von maximal 150mm, insbesondere von maximal 130mm, besonders bevorzugt 125mm auf. Die in horizontaler Richtung gemessene Breite des Musterfelds beträgt vorzugsweise maximal 120mm, insbesondere maximal 100mm, besonders bevorzugt 90mm.

Gemäß einem Ausführungsbeispiel weist die Messmarke ein Muster auf, das mittels einer Kamera erfassbar ist. Das Muster kann insbesondere mehrere geometrische Formen umfassen. Eine Rechnereinheit, die zur Berechnung der Lage und Ausrichtung der Messmarken und damit der Lage und Ausrichtung der Räder des Fahrzeugs ausgebildet ist, verarbeitet die von der Kamera bereitgestellten Bildinformationen, die das Muster enthalten und vergleicht diese mit einem Referenzmuster. Über die Veränderung des erfassten Musters relativ zum Referenzmuster kann die Lage und Ausrichtung der Räder des Fahrzeugs berechnet werden.

Gemäß einem Ausführungsbeispiel ist eine an der Vorderachse anzuordnende Messmarke gegenüber der Radnabenmitte nach unten und eine an der Hinterachse anzuordnende Messmarke nach oben versetzt angeordnet. Alternativ ist eine an der Vorderachse anzuordnende Messmarke gegenüber der Radnabenmitte nach oben und eine an der Hinterachse anzuordnende Messmarke gegenüber der Radnabenmitte nach unten versetzt angeordnet. Insbesondere ist die vertikale Beabstandung derart gewählt, dass sich bei einer horizontal ausgerichteten Sichtlinie des Sensors keine Überlappung der Messmarken ergibt. Durch diese Arten des vertikalen Versatzes kann eine vorteilhafte, Aufstellflächen-reduzierte Erfassung der Messmarken erfolgen.

Gemäß einem Ausführungsbeispiel ist der Höhenversatz derart gewählt, dass eine an der Vorderachse angeordnete Messmarke in Bezug auf eine Radnabenebene, die durch die Radnabenmitten des Fahrzeugs aufgespannt wird, vollständig unterhalb dieser Radnabenebene und eine an der Hinterachse angeordnete Messmarke vollständig oberhalb dieser Radnabenebene liegt. Damit kann erreicht werden, dass sich eine vorderachsseitig und eine hinterachsseitig montierte Messmarke bei einer horizontalen Sichtlinie des Sensors nicht überdecken.

Gemäß einem alternativen Ausführungsbeispiel ist der Höhenversatz derart gewählt, dass eine an der Vorderachse angeordnete Messmarke in Bezug auf eine Radnabenebene, die durch die Radnabenmitten des Fahrzeugs aufgespannt wird, vollständig oberhalb dieser Radnabenebene und eine an der Hinterachse angeordnete Messmarke vollständig unterhalb dieser Radnabenebene liegt. Auch hierdurch wird erreicht, dass sich eine vorderachsseitig und eine hinterachsseitig montierte Messmarke bei einer horizontalen Sichtlinie des Sensors nicht überdecken.

Gemäß einem Ausführungsbeispiel ist der Messmarkenträger dazu ausgebildet ist, auf eine Felge des Fahrzeugs aufgespannt zu werden. Der Messmarkenträger kann drei oder mehr Arme aufweisen, mittels denen sich der Messmarkenträger auf den äußeren Felgenrand eines Rades aufspannen lässt. Dadurch lässt sich die Messmarke an der vom Fahrzeug abgewandten Außenseite des Rades befestigen.

Gemäß einem Ausführungsbeispiel weist die Messstation einen horizontal oder im Wesentlichen horizontal verlaufenden Messbalken auf, an dem die Sensoren zur Erfassung der Messmarken vorgesehen sind. Der Messbalken weist eine Breite auf, die größer ist als die Breite des zu vermessenden Fahrzeugs, so dass die Sensoren die seitlich von den Rädern abstehenden Messmarken erfassen können. Die Breite des Messbalkens ist beispielsweise an die Fahrzeugbreite derart angepasst, dass die Breite des Messbalkens der Fahrzeugbreite im Bereich der Räder zuzüglich der beiden seitlich von den Rädern abstehenden Messmarken entspricht.

Gemäß einem Ausführungsbeispiel weist der Messbalken eine Breite von maximal 2,8m, insbesondere eine Breite zwischen 2,3m und 2,5m auf. Damit können mittels der Messstation gängige Fahrzeuge, insbesondere Personenkraftwagen, vermessen werden, und zwar derart, dass die Sensoren die Messmarken in einer parallel oder im Wesentlichen parallel zur Mittellängsachse des Fahrzeugs verlaufenden Sichtlinie erfassen.

Gemäß einem Ausführungsbeispiel sind die Sensoren zur Erfassung der Messmarken in einem Höhenbereich zwischen 30cm und 40cm in Bezug auf den Boden, auf dem die Messtation steht, angeordnet. In anderen Worten befinden sich die Sensoren zumindest im Wesentlichen auf der Höhe der Radnabenmitte des zu vermessenden Fahrzeugs. Damit können die auf Höhe der Radnabenmitte angeordneten Messmarken durch die Sensoren in einer horizontal oder im Wesentlichen horizontal verlaufenden Sichtlinie erfasst werden.

Gemäß einem Ausführungsbeispiel ist an der Messtation ein Paar von Sensoren angeordnet. Die Sensoren weisen zueinander einen Abstand von maximal 2,8m, insbesondere eine Breite im Bereich 2,3m bis 2,5m auf. Damit kann eine Erfassung der Messmarken mit reduzierter Baugröße der Messstation erreicht werden.

Gemäß einem Ausführungsbeispiel weist die Messtation eine Rechnereinheit auf. Auf der Rechnereinheit ist ein Programm zur Bestimmung der Position der Messmarken basierend auf den durch die Sensoren bereitgestellten Messinformationen vorgesehen, wobei das Programm dazu konfiguriert ist, den relativ zur Radnabenmitte bestehenden Höhenversatz der Messmarken zu kompensieren. Dadurch kann der Höhenversatz, der zur verdeckungsfreien Erfassung der Messmarken vorgesehen ist, rechnerisch ausgeglichen werden, d.h. nach dem Ausgleich werden modifizierte Messinformationen erhalten, wie wenn die Messmarken in vertikaler Richtung auf die Radnabenmitte hin ausgerichtet sind.

Gemäß einem weiteren Aspekt wird ein Verfahren zur Erfassung der Lage und Ausrichtung der Räder eines Fahrzeugs mittels einer Messstation mit mehreren Sensoren und mehreren Messmarkenträgern mit daran angeordneten Messmarken offenbart. Das Verfahren umfasst folgende Schritte:
- Anordnen der Messmarkenträger an den Rädern des Fahrzeugs, wobei die Messmarken an den Messmarkenträgern in Bezug auf eine Messmarkenträgermitte, die auf Höhe der Radnabenmitte an dem jeweiligen Rad des Fahrzeugs anzuordnen ist, höhenversetzt angeordnet sind, so dass die an unterschiedlichen Fahrzeugachsen angeordneten Messmarken relativ zueinander einen Höhenversatz aufweisen;
- Erfassen der Messmarken mittels der Sensoren der Messstation;
- Übermitteln von Messinformationen, die durch die Sensoren bereitgestellt werden, an eine Rechnereinheit;
- Ermitteln der Lage und Ausrichtung der Räder des Fahrzeugs durch die Rechnereinheit unter Kompensation des Höhenversatzes der Messmarken.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine Messanordnung zur Vermessung der Lage und Ausrichtung der Räder gemäß dem Stand der Technik in einer Draufsichtdarstellung;
- Fig. 2: beispielhaft eine erfindungsgemäße Messanordnung zur Vermessung der Lage und Ausrichtung der Räder in einer Draufsichtdarstellung; und
- Fig. 3: beispielhaft die Messanordnung gemäß Fig. 2 in einer Seitendarstellung.

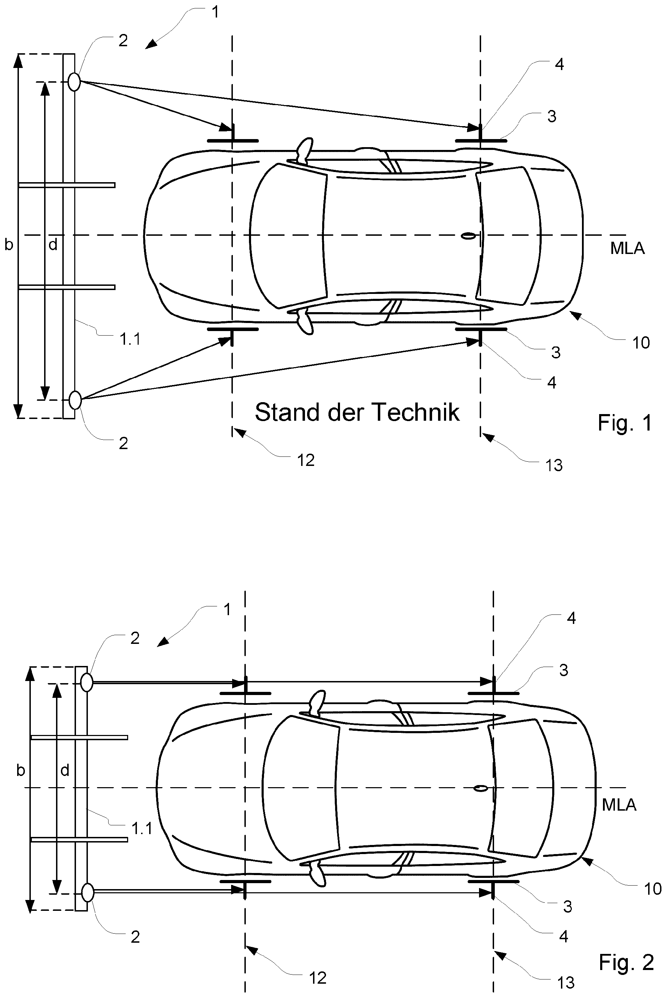

Die Fig. 1 zeigt eine Messanordnung gemäß Stand der Technik. Die Messanordnung umfasst eine Messstation 1, die beispielsweise vor oder hinter einem Fahrzeug 10 angeordnet ist. Die Messtation 1 ist dazu ausgebildet, an den Rädern 11 des Fahrzeugs 10 angeordnete Messmarken 4 zu erfassen und basierend darauf die geometrische Fahrachse des Fahrzeugs 10 zu bestimmen. Diese geometrische Fahrachse wird entscheidend durch die Position und Ausrichtung der Räder beeinflusst. Daher ist es nötig, die Position und Ausrichtung der Räder 11 mittels der Messtation 1 zu bestimmen. Es sei angemerkt, dass sich die geometrische Fahrachse von der Mittellängsachse MLA des Fahrzeugs 10 unterscheiden kann. Die Mittelängsachse MLA ist die mittig in Längsrichtung durch die Fahrzeugkarosserie verlaufende Achse, d.h. die zwischen einem vorderen Karosseriemittelpunkt und einem hinteren Karosseriemittelpunkt verlaufende Achse. Die geometrische Fahrachse kann von dieser Mittelängsachse MLA des Fahrzeugs 10 abweichen, insbesondere dann, wenn ein oder mehrerer Räder 11 eines Fahrzeugs 10 Fehlstellungen aufweisen.

Wie in Fig. 1 gezeigt, ist jeweils zumindest eine Messmarke 4 einem Rad 11 zugeordnet, d.h. bei einem Fahrzeug 10 mit vier Rädern 11 befinden sich jeweils zwei Messmarken 4 an der Vorderachse 12 und zwei Messmarken 4 an der Hinterachse 13. Die Messmarken 4 können beispielsweise mittels Messmarkenträger 3 an den Rädern 11 angeordnet sein. Die Messmarkenträger 3 sind insbesondere zur spannenden Befestigung der Messmarken 4 an der Felge des Fahrzeugs 10 ausgebildet. Der Messmarkenträger 3 ist dazu konfiguriert, die Messmarke 4 relativ zu einer äußeren Radseitenfläche zu beabstanden, so dass die Messmarke 4 seitlich von dem Rad 11 absteht.

Gemäß dem Stand der Technik sind die Messmarken 4 derart an den Rädern 4 angeordnet, dass die jeweilige Messmarke 4 in horizontaler und vertikaler Richtung gesehen auf die Radnabenmitte zentriert an dem jeweiligen Rad 11 angeordnet ist. In anderen Worten sind die Messmarken 4 an den Messmarkenträgern 3 in Bezug auf eine Messmarkenträgermitte 3.1, die auf Höhe der Radnabenmitte an den Rädern 11 des Fahrzeugs 10 anzuordnen ist, zentriert angeordnet. Die Messmarken können beispielsweise 3D-Messmarken sein, über die die Radposition im Raum (d.h. dreidimensional) sowie auch die winkelmäßige Radstellung (z.B. Radsturz) messbar sind.

Die Messstation 1 weist einen Messbalken 1.1 auf, der bevorzugt horizontal oder im Wesentlichen horizontal ausgebildet ist und sich damit entlang der Fahrzeugbreite erstreckt. An dem Messbalken 1.1 sind Sensoren 2 vorgesehen, und zwar ein Sensor 2 im linken Endbereich des Messbalkens 1.1 und ein Sensor 2 im rechten Endbereich des Messbalkens 1.1. Die Sensoren 2 sind dazu ausgebildet, die an einer Fahrzeugseite angeordneten Messmarken 4 zu erfassen. D.h. ein erster Sensor erfasst die an den linken Rädern des Fahrzeugs 10 angeordneten Messmarken 4 und ein zweiter Sensor erfasst die an den rechten Rädern des Fahrzeugs 10 angeordneten Messmarken 4. Die Sensoren 2 können beispielsweise Kameras sein.

Da die Messmarken 4 im Stand der Technik an der Vorderachse 13 und der Hinterachse 14 auf gleicher Höhe angeordnet sind, ist es nötig, dass der Abstand d der Sensoren 2, wie in Fig. 1 gezeigt, deutlich größer ist als die Fahrzeugbreite bzw. der Abstand der an der Vorderachse 13 und Hinterachse 14 angeordneten Messmarken 4, so dass die Sensoren 2 schräg von außen die Fahrzeugseite ausgerichtet werden können und damit die Messmarken 4 schräg von vorne erfassen. Die Breite b des Messbalkens 1.1 muss daher deutlich größer sein als die Breite des Fahrzeugs 10, beispielsweise 3m oder größer. Eine Anordnung der Sensoren 2 auf Höhe der jeweiligen Messmarken, d.h. einem horizontal gemessenen Abstand der Sensoren 2 relativ zueinander gleich oder im Wesentlichen gleich dem Abstand der an der Vorderachse 13 und Hinterachse 14 angeordneten Messmarken 4 ist bei dieser Konfiguration nicht möglich, da die an der Vorderachse 13 angeordneten Messmarken 4 die Messmarken 4 der Hinterachse 14 verdecken.

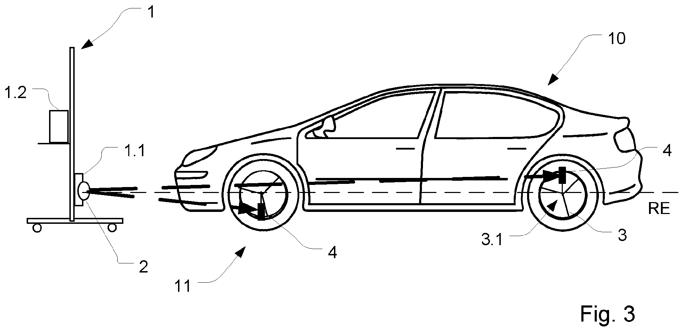

Fig. 2 und 3 zeigen eine erfindungsgemäße Messanordnung. Nachfolgend werden lediglich die Unterschiede der Messanordnung dieser Figuren im Vergleich zur Messanordnung der Fig. 1 beschrieben. Im Übrigen gelten die vorher beschriebenen Details auch für die Messanordnung gemäß Fig. 2 und 3.

Wie aus der Zusammenschau der Figuren 2 und 3 erkennbar, sind die Messmarken 4 in horizontaler Richtung gesehen im Bereich der Radnabenmitte des jeweiligen Rades 11 angeordnet (s. die Draufsichtdarstellung der Fig. 2). In vertikaler Richtung weisen die Messmarken 4 jedoch einen Versatz zur Radnabenmitte bzw. zu der Radnabenebene RE auf, und zwar die Messmarken 4 der Vorderachse 13 einen Versatz in die entgegengesetzte Richtung wie die Messmarken 4 der Hinterachse 13. In anderen Worten sind die Messmarken 4 an den Messmarkenträgern 3 in Bezug auf die Messmarkenträgermitte 3.1, die auf Höhe der Radnabenmitte an den Rädern 11 des Fahrzeugs 10 anzuordnen ist, höhenversetzt angeordnet. Beispielsweise weisen die Messmarken 4 der Vorderachse 13 einen definierten, in vertikaler Richtung gemessenen Versatz zur Radnabenmitte auf und sind damit tiefer angeordnet als die Radnabenmitte. Die Messmarken 4 der Hinterachse 14 hingegen weisen ebenfalls einen definierten, in vertikaler Richtung gemessenen Versatz zur Radnabenmitte auf und sind damit höherer angeordnet als die Radnabenmitte. In anderen Worten sind die Messmarken 4 der Vorderachse 13 und der Hinterachse 14 in vertikaler Richtung gesehen in unterschiedliche Richtungen versetzt angeordnet, so dass bei einer Anordnung der Sensoren 2 mit einem Abstand d relativ zueinander, der zumindest im Wesentlichen dem Abstand der beiden Messmarken 4, die an der Vorderachse 13 oder an der Hinterachse 14 angeordnet sind, entspricht, keine Verdeckung der hinterachsseitig montierten Messmarke 4 durch die vorderachsseitig montierte Messmarke 4 erfolgt. Es versteht sich, dass der vorgeschriebene vertikale Versatz auch in umgekehrter Weise erfolgen kann, d.h. die vorderachsseitig montierte Messmarke 4 ist höher angeordnet als die hinterachsseitig montierte Messmarke 4.

Durch den vertikalen Versatz der vorderachsseitig montierten Messmarken 4 im Vergleich zu den hinterachsseitig montierten Messmarken 4 können die Sensoren 2 am Messbalken 1.1 derart montiert werden, dass diese die Messmarken 4 in einer Richtung parallel oder im Wesentlichen parallel zur Mittellängsachse MLA des Fahrzeugs 10 erfassen und die Erfassungsrichtung des Sensors 2 horizontal oder im Wesentlichen horizontal verläuft. Damit kann zum einen der Messbalken 1.1 der Messstation in der Breite deutlich reduziert werden, was Vorteile im Hinblick auf die benötigte Aufstellfläche bietet. Zum anderen kann die Messanordnung beispielsweise auch bei Säulenhebebühnen verwendet werden, die jeweils eine seitlich neben dem Fahrzeug angeordnete Hubsäule aufweisen. Bei einer schrägen Erfassung von vorne oder von hinten, wie dies in Fig. 1 skizziert ist, verdeckt die Hubsäule die weiter entfernt zur Messtation 1 liegende Messmarke 4. Bei einer in vertikaler Richtung versetzten Anordnung der Messmarken 4 können die Sensoren 2 die Messmarken 4 in einem Bereich zwischen der Fahrzeugseitenfläche und der Hubsäule der Säulenhebebühne hindurch erfassen. Durch den vertikalen Versatz der Messmarken 4 können die Sensoren 2 zudem in einer geringeren Höhe montiert werden, so dass die Bauhöhe der Messtation 1 reduziert werden kann.

Die Messtation 1 weist eine Recheneinheit 1.2 auf, die mit den Sensoren 2 gekoppelt ist und Messinformationen von diesen Sensoren 2 empfängt. Die Rechnereinheit 1.2 umfasst ein Programm zur Erfassung der Lage und Ausrichtung der Räder 11 des Fahrzeugs 10. Das Programm kann zur Kalibrierung von Sensoren eines Fahrassistenzsystems des Fahrzeugs 10 ausgebildet sein, wobei das Programm hierfür die geometrische Fahrachse des Fahrzeugs 10 ermittelt, welche auf der Lage und Ausrichtung der Räder 11 des Fahrzeugs 10 basiert.

Das Programm der Recheneinheit 1.2 ist dazu ausgebildet, den Versatz der Messmarken 4 zu kompensieren. Hierzu ist im Programm ein Wert einstellbar oder fest vorgegeben, der den Versatz der Messmarken 4 der Vorderachse 13 und der Hinterachse 14 definiert. Dieser für die jeweilige Achse gespeicherte Wert kann mit der durch den Sensor ermittelten vertikalen Position der Messmarke verrechnet werden. Insbesondere kann der Wert zu dem vertikalen Positionswert addiert oder subtrahiert werden. Dadurch kann der Versatz der Messmarken 4 programmseitig herausgerechnet werden. Wenn zum Beispiel die Messmarken 4 der Vorderachse 13 in Bezug auf die Radnabenmitte um 10cm nach unten und die Messmarken 4 der Hinterachse 14 in Bezug auf die Radnabenmitte um 10cm nach oben versetzt angeordnet sind, kann die gemessene Position einer an der Vorderachse montierten Messmarke dadurch korrigiert werden, dass zu dem gemessenen Wert der Versatzwert von 10cm addiert oder subtrahiert wird. Die Korrektur des Messwerts der an der Hinterachse 14 montierten Messmarke 4 kann in umgekehrter Weise erfolgen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Messstation
- 1.1: Messbalken
- 1.2: Recheneinheit
- 2: Sensoren
- 3: Messmarkenträger
- 3.1: Messmarkenträgermitte
- 4: Messmarke

- 10: Fahrzeug
- 11: Rad
- 12: Vorderachse
- 13: Hinterachse

- b: Breite
- d: Abstand
- RE: Radnabenmitte
- MLA: Mittellängsachse des Fahrzeugs

## Patentansprüche

1. Anordnung umfassend eine Messstation (1) mit mehreren Sensoren (2) zur Erfassung von Messmarken (4) und mehrere an den Rädern eines Fahrzeugs (10) zu montierende Messmarkenträger (3) mit daran angeordneten Messmarken (4), wobei die Messmarken (4) an den Messmarkenträgern (3) in Bezug auf eine Messmarkenträgermitte (3.1), die auf Höhe der Radnabenmitte an den Rädern (11) des Fahrzeugs (10) anzuordnen ist, höhenversetzt angeordnet sind, und zwar derart, dass eine an der Hinterachse (13) anzuordnende Messmarke (4) einen Höhenversatz in eine erste Richtung aufweist und dass eine an der Vorderachse (12) anzuordnende Messmarke (4) einen Höhenversatz in eine zweite Richtung aufweist, die zur ersten Richtung entgegengesetzt verläuft, wobei jeweils ein Sensor (2) den auf einer Fahrzeugseite angeordneten Messmarken (4) zugeordnet ist und wobei die Sensoren (2) derart ausgerichtet sind, dass diese jeweils gleichzeitig eine an der Vorderachse (12) montierte Messmarke (4) und eine an der Hinterachse (13) montierte Messmarke (4) erfassen.

2. Anordnung nach Anspruch 1, **dadurch gekennzeichnet, dass** die Sensoren (2) in vertikaler Richtung jeweils zumindest im Wesentlichen auf Höhe der Radnabenmitte angeordnet sind.

3. Anordnung nach Anspruch 1 oder 2, **dadurch gekennzeichnet, dass** an der Messtation (1) ein Paar von Sensoren (2) angeordnet ist und dass die Sensoren (2) zueinander einen Abstand (d) aufweisen, der gleich oder im Wesentlichen gleich dem Abstand der an einer Fahrzeugachse auf gegenüberliegenden Fahrzeugseiten angeordneten Messmarken (4) ist.

4. Anordnung nach einem der vorhergehenden Ansprüche, **dadurch gekennzeichnet, dass** die Sensoren (2) in horizontaler Richtung gesehen einen Abstand (d) aufweisen, der im Wesentlichen dem Abstand entspricht, den die Messmarkenmittelpunkte der an einer Achse angeordneten Messmarken (4) aufweisen.

5. Anordnung nach einem der vorhergehenden Ansprüche, **dadurch gekennzeichnet, dass** die Messmarken (4) jeweils ein rechteckförmig ausgebildetes Musterfeld aufweisen und dass im montierten Zustand der Messmarke (4) das Musterfeld hochkant ausgerichtet ist.

6. Anordnung nach einem der vorhergehenden Ansprüche, **dadurch gekennzeichnet, dass** eine an der Vorderachse (12) anzuordnende Messmarke (4) gegenüber der Radnabenmitte nach unten und eine an der Hinterachse (13) anzuordnende Messmarke (4) nach oben versetzt angeordnet ist.

7. Anordnung nach einem der Ansprüche 1 bis 5, **dadurch gekennzeichnet, dass** eine an der Vorderachse (12) anzuordnende Messmarke (4) gegenüber der Radnabenmitte nach oben und eine an der Hinterachse (13) anzuordnende Messmarke (4) gegenüber der Radnabenmitte nach unten versetzt angeordnet ist.

8. Anordnung nach einem der Ansprüche 1 bis 6, **dadurch gekennzeichnet, dass** der Höhenversatz derart gewählt ist, dass eine an der Vorderachse (12) angeordnete Messmarke (4) in Bezug auf eine Radnabenebene (RE), die durch die Radnabenmitten des Fahrzeugs (10) aufgespannt wird, vollständig unterhalb dieser Radnabenebene (RE) und eine an der Hinterachse (13) angeordnete Messmarke (4) vollständig oberhalb dieser Radnabenebene (RE) liegt.

9. Anordnung nach einem der Ansprüche 1 bis 5 oder nach Anspruch 7, **dadurch gekennzeichnet, dass** der Höhenversatz derart gewählt ist, dass eine an der Vorderachse (12) angeordnete Messmarke (4) in Bezug auf eine Radnabenebene (RE), die durch die die Radnabenmitten des Fahrzeugs (10) aufgespannt wird, vollständig oberhalb dieser Radnabenebene (RE und eine an der Hinterachse (13) angeordnete Messmarke (4) vollständig unterhalb dieser Radnabenebene (RE) liegt.

10. Anordnung nach einem der vorhergehenden Ansprüche, **dadurch gekennzeichnet, dass** der Messmarkenträger (3) dazu ausgebildet ist, auf eine Felge des Fahrzeugs aufgespannt zu werden.

11. Anordnung nach einem der vorhergehenden Ansprüche, **dadurch gekennzeichnet, dass** die Messstation (1) einen horizontal oder im Wesentlichen horizontal verlaufenden Messbalken (1.1) aufweist, an dem die Sensoren (2) zur Erfassung der Messmarken (4) vorgesehen sind.

12. Anordnung nach Anspruch 11, **dadurch gekennzeichnet, dass** der Messbalken (1) eine Breite (b) von maximal 2,8m aufweist.

13. Anordnung nach einem der vorhergehenden Ansprüche, **dadurch gekennzeichnet, dass** an der Messtation (1) ein Paar von Sensoren (2) angeordnet ist und dass die Sensoren (2) zueinander einen Abstand von maximal 2,8m aufweisen.

14. Anordnung nach einem der vorhergehenden Ansprüche, **dadurch gekennzeichnet, dass** die Messtation (1) eine Rechnereinheit (1.2) aufweist und dass die Rechnereinheit (1.2) ein Programm zur Bestimmung der Position der Messmarken (4) basierend auf den durch die Sensoren (2) bereitgestellten Messinformationen umfasst, wobei das Programm dazu konfiguriert ist, den relativ zur Radnabenmitte bestehenden Höhenversatz der Messmarken (4) zu kompensieren.

15. Verfahren zur Erfassung der Lage und Ausrichtung der Räder eines Fahrzeugs (10) mittels einer Messstation (1) mit mehreren Sensoren (2) und mehreren Messmarkenträgern (3) mit daran angeordneten Messmarken (4), wobei das Verfahren folgende Schritte umfasst:
- Anordnen der Messmarkenträger (3) an den Rädern des Fahrzeugs (10), wobei die Messmarken (4) an den Messmarkenträgern (3) in Bezug auf eine Messmarkenträgermitte, die auf Höhe der Radnabenmitte an dem jeweiligen Rad (11) des Fahrzeugs (10) anzuordnen ist, höhenversetzt angeordnet sind, so dass die an unterschiedlichen Fahrzeugachsen angeordneten Messmarken (4) relativ zueinander einen Höhenversatz aufweisen;
- Erfassen der Messmarken (4) mittels der Sensoren (2) der Messstation (1);
- Übermitteln von Messinformationen, die durch die Sensoren (2) bereitgestellt werden, an eine Rechnereinheit (1.2);
- Ermitteln der Lage und Ausrichtung der Räder des Fahrzeugs (10) durch die Rechnereinheit (1.2) unter Kompensation des Höhenversatzes der Messmarken (4).
